# EUROPEAN PATENT SPECIFICATION

(11) **EP 4 080 094 B1**
(45) Date of publication and mention of the grant of the patent: **16.10.2024**
(21) Application number: 21905749.4
(22) Date of filing: 15.12.2021
(51) Int. Cl.: F16K 5/06, F16K 5/08, F16K 5/20, F16K 27/10

(54) **BALL VALVE**
KUGELVENTIL
ROBINET À TOURNANT SPHÉRIQUE

(30) Priority: 16.12.2020 CN 202023044719 U
(43) Date of publication of application: 26.10.2022
(73) Proprietor: Cixi Sanyang Electronics Co., Ltd, Ningbo, Zhejiang 315334 (CN)
(72) Inventor: WU, Jianping, Ningbo, Zhejiang 315334 (CN); XU, Cunyi, Ningbo, Zhejiang 315334 (CN); CHEN, Zheng, Ningbo, Zhejiang 315334 (CN)
(74) Representative: Meyer-Dulheuer MD Legal Patentanwälte PartG mbB
(86) International application number: PCT/CN2021/138334
(87) International publication number: WO 2022/127822

(56) References cited:
- EP-B1- 0 146 568
- CN-A- 104 595 517
- CN-A- 110 701 337
- CN-A- 110 953 372
- CN-U- 201 582 435
- CN-U- 202 048 234
- CN-U- 214 146 676
- DE-A1- 1 750 300
- DE-U- 7 506 291
- FR-A- 1 530 079
- KR-A- 20180 101 762
- KR-A- 20190 047 236
- US-A1- 2015 184 761
- US-A1- 2019 162 316
- US-B2- 9 625 039

## Description

### CROSS-REFERENCE TO RELATED APPLICATIONS

This application claims all benefits accruing from China Patent Application No. 202023044719.5, filed on December 16, 2020, titled "SEALING COMPONENT OF VALVE AND VALVE HAVING THE SAME" in the China National Intellectual Property Administration.

### TECHNICAL FIELD

The present invention generally relates to the technical field of a ball valve, and in particular, to a ball valve applied in a gas meter.

### BACKGROUND

A ball valve is mainly configured to cut off, distribute, and change a flow direction of a media in a gas transmission pipeline.

A conventional ball valve includes a driving structure, a valve body component, and a sealing component of the valve. The valve body component is provided with a valve port, and a driving component of the driving structure is capable of driving the sealing component of the valve to rotate, such that the sealing component of the valve is capable of opening or sealing the valve port. The conventional ball valve further includes a lip sealing member including at least one lip port, so as to have a self-sealing effect. The lip sealing member is configured to cooperate with the sealing component of the valve, thus improving a sealing performance of the valve port.

However, an arrangement of the lip sealing member has the following disadvantages. On the one hand, a complex structure of the lip sealing member enables it inconvenient for processing and manufacture, and leads to a complicated manufacturing process and a high cost. On the other hand, when installing the lip sealing member, it is necessary to distinguish a front side and a back side of the lip sealing member, so an installation of the lip sealing member is inconvenient and time consuming.

US2019162316A1 discloses a ball installed in a ball valve. The ball includes: a ball main body including a penetrating hole penetrating from a front portion to a rear portion thereof and having a predetermined diameter, and a concave recess formed on an upper portion thereof to be coupled to a stem of the ball valve; and insert members coupled to a left side and a right side of the ball main body. The insert members are coupled to the ball main body, such that, when the ball is installed in the ball valve and is placed in a position for closing the ball valve, each of the insert members covers a region of the ball contacting a seat of the ball valve, wherein the insert members are formed of a super hardness material.

DE1750300A1 discloses a valve whose valve body has the shape of a hollow spherical wedge, the valve body is formed in one piece with a completely or partially annular part with a spherical outer surface, which in the open position rests on the sealing ring around the outlet.

KR20180101762A discloses a dome valve that elastically adheres to a dome opening and closing portion rotating in a state where a metal sheet is disposed inside an elastic sheet to protect the elastic sheet from powder.

EP0146568B1 discloses that a valve seal particularly suitable for cryogenic service includes a hollow generally cylindrical member fabricated from a material which under cryogenic service conditions is flexible but substantially incompressible. Spaced annular grooves are formed on the inner wall of the member and a further groove is formed on the outer wall between grooves. The opposite grooves overlap slightly to form a "concertina" like wall cross section. A tapered seating surface is provided to engage the outer surface of a valve ball. In service, annular grooves provide a degree of resilience in a material otherwise incompressible under service conditions.

FR1530079A discloses that an upstream seal of a ball valve includes a resilient sealing ring secured to the casing, and a chromium plated stainless steel cap which is secured to the ball by screws, and which can be replaced without removing the ball from the casing. The concave leading edge of the cap is provided with ears having a smaller radius than the main surface of the cap to produce a wedging action during closing.

US9625039B2 discloses that an electric motor driven valve for use in gas meters, has at least one valve unit with a valve body and a valve element, a drive unit, and a connection unit. The units can be connected to each other and separated from each other, in a modular manner. The valve element is a spherical or cylindrical valve element that is sealed relative to the valve body by means of only one sealing element, which is preferably a lip seal. The valve body has two recesses in which the valve element is rotatably mounted.

### SUMMARY

It is desired to provide a ball valve to solve the above problem. Claim 1 defines a ball valve according to the invention. Claim 10 defines a sealing component for a ball valve according to the invention. The dependent claims define preferred embodiments according to the invention.

A ball valve includes a valve body structure and a driving structure. The valve body structure includes a valve body and a sealing component of a valve. The valve body is provided with a valve port, and the sealing component of the valve is installed in the valve body and capable of opening or sealing the valve port. At least a part of the driving structure is capable of extending into the valve body and is connected to the sealing component of the valve to drive the sealing component of the valve to move in the valve body. The valve body structure further includes a sealing member, which is surrounding the valve port and configured to cooperate with the sealing component of the valve to seal the valve port. A longitudinal cross section of the sealing member is in a shape of any one of a convex polygon, an ellipse, a circle, a D-shape, or a waist shape.

In the present invention, due to an arrangement of the sealing member, a time-saving and simple installation of the sealing member may be implemented. In addition, due to a simple structure of the sealing member, it is convenient to process and manufacture the sealing member at a low cost. Meanwhile, a normal pressing contact between the sealing component of the valve and the sealing member may be maintained, thus achieving a good sealing effect.

In an embodiment, a sealing groove is located at an end close to the valve port of the valve body, and at least a part of the sealing member is installed in the sealing groove. The valve body structure further includes a resisting member installed in the valve body. An end of the resisting member abuts against the sealing member to limit the sealing member.

In this way, it is convenient to install and fix the sealing member, thus preventing the sealing member from detaching.

In an embodiment, the valve body structure further includes a valve bonnet and an elastic member. The valve bonnet is installed on an end away from the valve port of the valve body, and at least a part of the valve bonnet is capable of extending into the valve body and abuts against the sealing component of the valve. The elastic member is located between the valve bonnet and the sealing component of the valve. A first end of the elastic member abuts against the valve bonnet, and a second end of the elastic member abuts against the sealing component of the valve.

In this way, an arrangement of the elastic member may provide a support for the sealing component of the valve. Thus, a movement of the sealing component of the valve may be facilitated, and a smoothness of the movement of the sealing component of the valve may be improved.

In an embodiment, the elastic member includes a planar spring.

In this way, the planar spring may have a simple structure, and thus it is convenient to install and disassemble the planar spring, and a relatively large installation deviation may be allowed during the installation. In addition, the planar spring may better cooperate with the sealing component of the valve to provide a support. Moreover, the planar spring may have a long service life, a good cushioning effect and a strong bearing capacity.

In an embodiment, the elastic member includes a deformation segment and a mounting segment. The deformation segment includes at least one deformation unit. The mounting segment is located at an end of at least one deformation segment, connected to the at least one deformation segment, and located in the same horizontal plane as the at least one deformation segment. The sealing component of the valve abuts against the mounting segment.

In this way, the mounting segment may better cooperate with the sealing component of the valve to facilitate assembly.

In an embodiment, the sealing component of the valve includes a mounting portion. The mounting segment of the elastic member includes a recessed unit. The recessed unit is depressed along a direction away from the sealing component of the valve, and a peripheral side of the mounting portion abuts against the recessed unit. A shape of the recessed unit is matched with a shape of the peripheral side of the mounting portion.

In this way, the mounting portion is capable of abutting against the recessed unit, so that a fast and stable installation may be realized. In addition, during an installation of the mounting portion, a misalignment may not occur, thereby improving a stability of an overall structure of the sealing component of the valve and a rapidity of the installation.

In an embodiment, a mounting groove is located on the valve bonnet. A fitting groove is located on an outer side wall of the mounting portion. At least a part of the elastic member is installed in the mounting groove. A first end of the elastic member abuts against the valve bonnet, and a second end of the elastic member is installed in the fitting groove.

In this way, an installation of the elastic member may be facilitated, and the elastic member may be limited. In addition, the elastic member may better cooperate with the fitting groove, so as to provide a better support for the sealing component of the valve.

In an embodiment, the valve body is connected to the valve bonnet by means of an ultrasonic welding or a hot melt connection.

In this way, during an ultrasonic welding, high-frequency vibration waves are transmitted to surfaces of the valve body and the valve bonnet, and under pressure, the surfaces of the valve body and the valve bonnet may rub against each other to define a fusion between molecular layers. The ultrasonic welding may have characteristics of a fast welding speed, a short welding time, a high welding strength, and a good sealing performance. In addition, the ultrasonic welding may be cost effective, clean and pollution-free. Meanwhile, the hot melt connection may have advantages such as a simple connection, a long service life, and an ability of resisting corrosion.

In an embodiment, the driving structure includes a base and an upper cover. The upper cover is disposed on the base and connected to the base by means of an ultrasonic welding or a hot melt connection.

In this way, during an ultrasonic welding, high-frequency vibration waves are transmitted to surfaces of the upper cover and the base, and under pressure, the surfaces of the upper cover and the base may rub against each other to form a fusion between molecular layers. The ultrasonic welding may have characteristics of a fast welding speed, a short welding time, a high welding strength, and a good sealing performance. In addition, the ultrasonic welding may be cost effective, clean and pollution-free. Meanwhile, the hot melt connection may have advantages such as a simple connection, a long service life, and an ability of resisting corrosion.

In an embodiment, an outer side wall of the valve body is provided with a connecting portion. A side close to the valve body of the base is provided with a fitting portion, and the connecting portion and the fitting portion are coupled to and connected with each other.

In this way, a quick connection between the valve body and the base may be realized.

In an embodiment, a part of the connecting portion protruding in a circumferential direction is defined as a connecting block. The fitting portion includes a connecting groove structure. The connecting block is capable of extending into the connecting groove structure and engaging with the connecting groove structure.

In this way, the valve body and the base may be quickly engaged to each other by an arrangement of the connecting block and the connecting groove structure. Thus, a simple structure thereof may be implemented. Accordingly, a convenient and quick installation may be achieved.

In an embodiment, the connecting groove structure includes a receiving groove, a connecting groove, and a resisting block. The connecting block is capable of extending into the receiving groove. A side of the connecting groove is in communication with the receiving groove. The resisting block is located at a side away from the receiving groove of the connecting groove and connected to a bottom of the connecting groove. The connecting block is capable of moving from the receiving groove to the connecting groove and abutting against the resisting block, and the connecting groove is capable of limiting a movement of the connecting block along a height direction of the resisting block.

In this way, a simple structure of the connecting groove structure and a quick installation may be realized, and it is easy to limit the connecting block. Therefore, a quick installation between the valve body and the base may be achieved.

In an embodiment, the number of the connecting block is four. Four connecting blocks are evenly separated from each other in a circumference of the connecting portion, and the four connecting blocks are located in the same horizontal plane. The number of the connecting groove structure is four. Four connecting groove structures are connected with each other in order. In two adjacent connecting groove structures, a resisting block of one of the two adjacent connecting groove structures is connected to a receiving groove of the other of the two adjacent connecting groove structures.

In this way, the connection between the valve body and the base may be firmer, thereby enhancing a connection stability of an overall structure of the ball valve.

In an embodiment, the driving structure has a mounting chamber. The driving structure further includes an electric motor, a driving component, and a valve rod component. The electric motor is installed in the mounting chamber. The driving component is installed in the mounting chamber and connected to the electric motor. A first end of the valve rod component is installed in the mounting chamber and fitted with the driving component, and a second end of the valve rod component extends out of the mounting chamber and further extends into the valve body to be fitted with the mounting portion. The electric motor is capable of driving the driving component to move, and the driving component is capable of driving the valve rod component to rotate, enabling the valve rod component to drive the sealing component of the valve to rotate along an axis of the mounting portion, so as to open or seal the valve port.

In this way, opening or sealing of the valve port may be implemented.

According to the invention, the sealing component of the valve includes a rotating body and a sealing structure. The rotating body includes a flow-through surface and a sealing surface which are adjacent, and an angle is defined between the flow-through surface and the sealing surface. In addition, a flow-guiding hole is located in the flow-through surface for a medium to flow through. The sealing structure is installed on the sealing surface and capable of sealing the valve port with a rotation of the rotating body.

In this way, the sealing structure may be installed on the sealing surface and capable of sealing the valve port with a rotation of the rotating body.

According to the invention, a material of the sealing structure is a metal material. In an embodiment not according to the invention, the sealing structure is made of a plastic material.

In this way, since the sealing structure is made of metal, wear of the sealing structure due to repeated sealing of the valve port by driving of the rotating body may be avoided, thereby prolonging a service life of the sealing component of the valve. In addition, since the sealing structure is made of metal, the sealing structure is easy to be processed and manufactured. In addition, the sealing structure 10 made of metal is less likely to be deformed during repeated sealing of the valve port, thus an air tightness and a fitness can be enhanced, thereby prolonging a service life of the sealing component of the valve.

In an embodiment, the sealing structure is detachably installed on the sealing surface.

In this way, since the sealing structure is processed and manufactured by computer numerical controlled (CNC) machining, a separate arrangement may be realized, thus facilitating processing and manufacture of the sealing structure. Moreover, it is convenient to replace the sealing structure when necessary.

According to the invention, the sealing structure includes a sealing plate and a connecting column. The sealing plate is configured for sealing the valve port. The connecting column is disposed on a side surface of the sealing plate. A part of the sealing surface depressing is defined as a fitting hole, and the connecting column is capable of inserting into the fitting hole, enabling the sealing structure to be installed on the sealing surface.

In this way, the connecting column is capable of inserting into the fitting hole, thus a connection between the sealing structure and the rotating body may be realized. Accordingly, it is convenient for the sealing structure to seal the valve port with a rotation of the rotating body.

According to the invention, an inner side of the sealing surface is provided with a buckling portion surrounding a circumference of the fitting hole and protruding along an axis of the fitting hole. A clamping slot is located on the connecting column. After the connecting column inserts into the fitting hole, the buckling portion is capable of clamping into the clamping slot.

In this way, the buckling portion is capable of clamping into the clamping slot, preventing the connecting column from easily detaching from the fitting hole. Accordingly, a stability of connection between the sealing structure and the rotating body may be enhanced.

According to the invention, the inner side of the sealing surface is provided with a plurality of buckling portions, and the plurality of buckling portions are separated from each other in a circumference of the fitting hole.

In this way, the plurality of buckling portions may further enhance a stable connection between the sealing structure and the rotating body.

In an embodiment, an end away from the sealing surface of the buckling portion is provided with a convex portion protruding along a radial direction of the fitting hole, and the convex portion is capable of clamping into the clamping slot after the connecting column inserts into the fitting hole.

In this way, the convex portion is capable of clamping into the clamping slot to define a buckle structure. Accordingly, a connection strength between the buckling portion and the connecting column may be enhanced, preventing the connecting column from easily detaching from the fitting hole.

In an embodiment, the convex portion has a guiding surface, and during the connecting column inserting into the fitting hole, the connecting column is capable of pressing the buckling portion under a guiding of the guiding surface, enabling the buckling portion to be deformed.

In this way, due to a guidance of the guiding surface to the connecting column, it is convenient for the connecting column to insert into the fitting hole and press the buckling portion, forcing the buckling portion to be deformed to clamp into the clamping slot.

In an embodiment, an end away from the sealing plate of the connecting column is provided with a guiding portion, and the guiding portion is configured to guide the connecting column to insert into the fitting hole.

In this way, because of the guidance of the guiding portion, the connecting column is capable of entering the fitting hole more smoothly, such that the buckling portion may be fitted with the clamping slot. In addition, due to cooperation between the guiding portion and the guiding surface, the connecting column and the fitting hole may be connected more quickly and easily by a simple structure, which greatly reduces a difficulty of installation.

In an embodiment, the guiding portion is in a shape of a circular truncated cone, and an inner diameter of an end away from the sealing surface of the guiding portion is less than an inner diameter of an end close to the sealing surface of the guiding portion.

In this way, since the guiding portion is in the shape of a circular truncated cone, the guidance of the guiding portion may be enhanced and an installation thereof may be facilitated. In addition, when the guiding portion gradually inserts into the fitting hole, a press strength of a circumferential side of the guiding portion on the buckling portion gradually increases, thus the buckling portion is deformed. Therefore, the convex portion is capable of clamping into the clamping groove, thereby realizing a connection between the sealing structure and the rotating body.

Compared with the related art, according to the ball valve provided by the present invention, because of an arrangement of the sealing member, a time-saving and simple installation of the sealing member may be facilitated. In addition, due to a simple structure of the sealing member, it is convenient to process and manufacture the sealing member at a low cost. Meanwhile, a normal pressing contact between the sealing component of the valve and the sealing member can be maintained, thus a good sealing effect can be achieved.

### BRIEF DESCRIPTION OF THE DRAWINGS

FIG. 1 is an exploded view of a ball valve in an example of the present invention.
FIG. 2 is a schematic structural diagram of a sealing member in an example of the present invention.
FIG. 3 is a schematic longitudinal cross sectional diagram of a sealing member in a first embodiment of the present invention.
FIG. 4 is a schematic longitudinal cross sectional diagram of a sealing member in a second embodiment of the present invention.
FIG. 5 is a schematic longitudinal cross sectional diagram of a sealing member in a third embodiment of the present invention.
FIG. 6 is a schematic longitudinal cross sectional diagram of a sealing member in a fourth embodiment of the present invention.
FIG. 7 is a schematic longitudinal cross sectional diagram of a sealing member in a fifth embodiment of the present invention.
FIG. 8 is a schematic longitudinal cross sectional diagram of a sealing member in a sixth embodiment of the present invention.
FIG. 9 is a schematic longitudinal cross sectional diagram of a sealing member in a seventh embodiment of the present invention.
FIG. 10 is a schematic longitudinal cross sectional diagram of a sealing member in an eighth embodiment of the present invention.
FIG. 11 is a schematic longitudinal cross sectional diagram of a sealing member in a ninth embodiment of the present invention.
FIG. 12 is a schematic longitudinal cross sectional diagram of a sealing member in a tenth embodiment of the present invention.
FIG. 13 is a schematic cross sectional diagram of a ball valve in an example of the present invention.
FIG. 14 is a schematic structural view of an elastic member in an example of the present invention.
FIG. 15 is a schematic cross sectional view of a structure of a part of a valve ball in an example of the present invention.
FIG. 16 is a schematic structural view of a part of a driving component in an example of the present invention.
FIG. 17 is a schematic structural view of a valve body in an example of the present invention.
FIG. 18 is a schematic structural view of a sealing component of a valve in an example of the present invention.
FIG. 19 is a schematic structural diagram of a sealing component of a valve from a viewpoint in an example of the present invention.
FIG. 20 is a structural schematic diagram of a sealing component of a valve from another viewpoint in an example of the present invention.
FIG. 21 is a partial enlarged view of a portion A in FIG. 20 in an example of the present invention.
FIG. 22 is a structural schematic view of a sealing structure in an example of the present invention.
FIG. 23 is a structural schematic view of a rotating body in an example of the present invention.
FIG. 24 is a structural schematic view of a rotating body from another viewpoint in an example of the present invention.

Descriptions of reference numerals in the accompanied drawings are as follows. 101 represent a ball valve; 30 represent a valve body structure; 31 represent a valve body; 311 represent a valve port; 312 represent a through hole; 313 represents a sealing groove; 314 represents a resisting member; 32 represents a sealing member; 33 represents a connecting portion; 331 represents a connecting block; 34 represents a valve bonnet; 341 represents an mounting groove; 342 represents a convex block; 35 represents an elastic member; 36 represents a planar spring; 351 represents a deformation segment; 3511 represents a deformation unit; 352 represents a mounting segment; 3521 represents a recessed unit; 40 represents a driving structure; 41 represents a base; 42 represents a fitting portion; 421 represents a connecting groove structure; 4211 represents a receiving groove; 4212 represents a connecting groove; 4213 represents a resisting block; 43 represents a mounting chamber; 44 represents an upper cover; 45 represents an electric motor; 46 represents a driving component; 47 represents a valve rod component; 100 represents a sealing component of the valve; 10 represents a sealing structure; 11 represents a connecting column; 111 represents a clamping slot; 112 represents a guiding portion; 12 represents a sealing plate ; 20 represents a rotating body; 21 represents a flow-through surface; 211 represents a flow-guiding hole; 22 represents a sealing surface; 221 represents a fitting hole; 222 represents a buckling portion; 2221 represents a convex portion; 2222 represents a guiding surface; 23 represents a mounting surface; 231 represents a mounting portion; 2311 represents a fitting groove; and 24 represents a reinforcement bar.

### DETAILED DESCRIPTION OF THE EMBODIMENTS

Hereinafter, the technical solutions in the embodiments of the present invention will be clearly and completely described with reference to the accompanying drawings in the embodiments of the present invention.

It should be noted that when a component is referred to as being "arranged" on another component, it may be directly arranged on the other component or an intervening component may be presented. When a component is considered to be "disposed" on another component, it may be directly disposed on the other component or an intervening component may be presented at the same time. When a component is considered to be "fixed" to another component, it may be directly fixed to the other component or an intervening component may be presented at the same time.

Unless otherwise defined, all technical and scientific terms used herein have the same meaning as commonly understood by one skilled in the art to which the present invention pertains. The terminology used in the description of the present invention is for the purpose of describing particular embodiments only and is not intended to limit the disclosure. As used herein, the term "or/and" includes any and all combinations of one or more associated listed items.

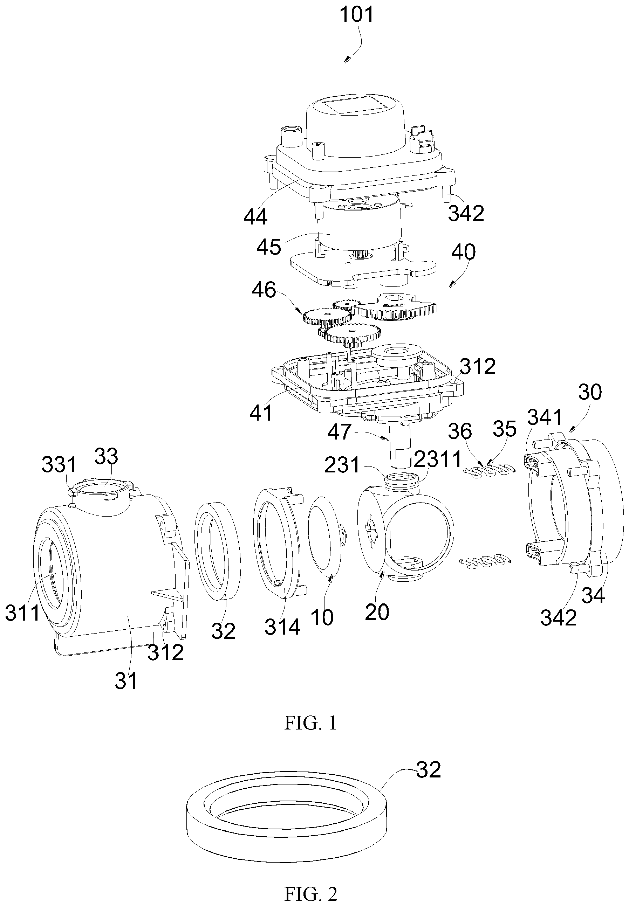

Referring to FIG. 1, the present invention provides a ball valve 101 which is applied in a gas meter. The ball valve 101 includes a valve body structure 30 and a driving structure 40. The valve body structure 30 includes a valve body 31 and a sealing component 100 of a valve. The valve body 31 is provided with a valve port 311. The sealing component 100 of the valve is installed in the valve body 31 and capable of opening or sealing the valve port 311. At least a part of the driving structure 40 is capable of extending into the valve body 31 and is connected to the sealing component 100 of the valve to drive the sealing component 100 of the valve to move in the valve body 31.

The valve body structure 30 further includes a sealing member 32, which is surrounding the valve port 311 and configured to cooperate with the sealing component 100 of the valve to seal the valve port 311.

Referring to FIG. 2 to FIG. 12, a longitudinal cross section of the sealing member 32 is in a shape of any one of a convex polygon, an ellipse, a circle, a D-shape, or a waist shape, which is convenient for a time-saving and simple installation of the sealing member 32. In addition, due to a simple structure of the sealing member 32, it is convenient to process and manufacture the sealing member 32 at a low cost. Meanwhile, a normal pressing contact between the sealing component 100 of the valve and the sealing member 32 may be maintained, thus a good sealing effect may be achieved. In an embodiment, a convex polygon refers to that if any one of sides of a polygon is infinitely extended to both sides into a straight line, and all the other sides are on the same side of the straight line, then the polygon is called a convex polygon.

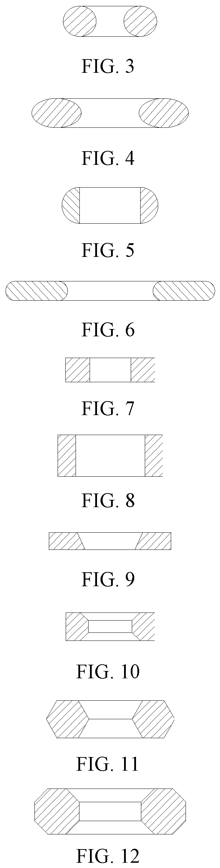

A first embodiment is provided.
Referring to FIG. 3, a shape of a longitudinal cross section of the sealing member 32 in the first embodiment is circular.

A second embodiment is provided.
Referring to FIG. 4, the shape of the longitudinal cross section of the sealing member 32 in the second embodiment is elliptical.

A third embodiment is provided.
Referring to FIG. 5, the shape of the longitudinal cross section of the sealing member 32 in the third embodiment is D-shaped.

A fourth embodiment is provided.
Referring to FIG. 6, the shape of the longitudinal cross section of the sealing member 32 in the fourth embodiment is waist shaped.

A fifth embodiment is provided.
Referring to FIG. 7, the shape of the longitudinal cross section of the sealing member 32 in the fifth embodiment is square.

A sixth embodiment is provided.
Referring to FIG. 8, the shape of the longitudinal cross section of the sealing member 32 in the sixth embodiment is rectangular.

A seventh embodiment is provided.
Referring to FIG. 9, the shape of the longitudinal cross section of the sealing member 32 in the seventh embodiment is quadrilateral.

An eighth embodiment is provided.
Referring to FIG. 10, the shape of the longitudinal cross section of the sealing member 32 in the eighth embodiment is hexagonal.

A ninth embodiment is provided.
Referring to FIG. 11, the shape of the longitudinal cross section of the sealing member 32 in the ninth embodiment is a regular hexagon.

A tenth embodiment is provided.
Referring to FIG. 12, the shape of the longitudinal cross section of the sealing member 32 in the tenth embodiment is a regular octagon.

The shape of the longitudinal cross section of the sealing member 32 in FIG. 7 to FIG. 12 is a convex polygon. Of course, in other embodiments, the convex polygon, the ellipse, the circle, the D-shape and the waist shape are not limited to those shown in the drawings. Also, dimensions or shapes of the convex polygon, the ellipse, the circle, the D-shape and the waist shape may be changed as required as long as definitions of the convex polygon, the ellipse, the circle, the D-shape and the waist shape are satisfied.

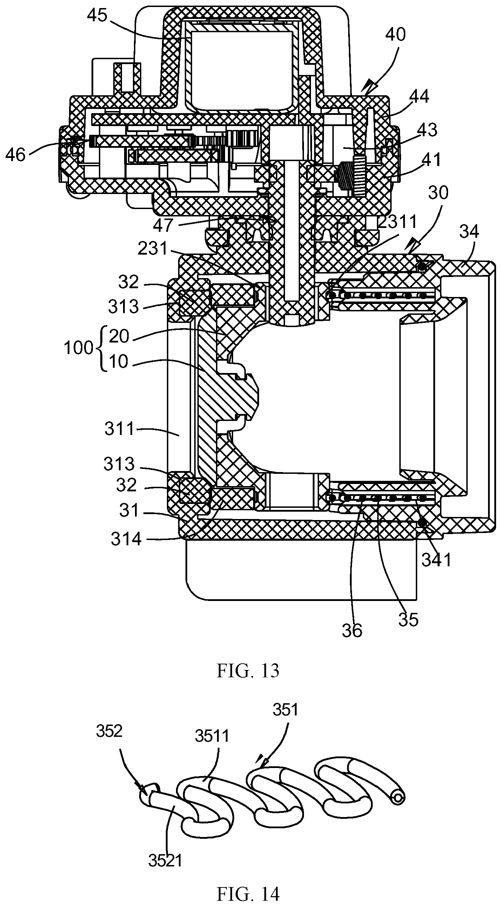

Referring to FIG. 1 and FIG. 13, furthermore, a sealing groove 313 is provided at an end close to the valve port 311 of the valve body 31, and at least a part of the sealing member 32 is installed in the sealing groove 313. The valve body structure 30 further includes a resisting member 314 which is installed in the valve body 31. An end of the resisting member 314 is capable of abutting against the sealing member 32 to limit the sealing member 32. In this way, it is convenient to install and fix the sealing member 32, so that the sealing member 32 is not easy to detach.

Referring to FIG. 1, alternatively, a shape of the sealing member 32 is an annular cylinder, i.e., the shape of the longitudinal cross section of the sealing member 32 is rectangular or square. The sealing member 32 in an annular cylinder has a simple structure, so that it is convenient to process and manufacture the sealing member 32 at a low cost by a simple process. Meanwhile, when installing the sealing member 32, there is no need to distinguish a front side and a back side, which may lead to a convenient, quick, and simple installation and a good sealing performance.

Referring to FIG. 13 and FIG. 14, the valve body structure 30 further includes a valve bonnet 34 and an elastic member 35. The valve bonnet 34 is installed on an end away from the valve port 311 of the valve body 31, and at least a part of the valve bonnet 34 is capable of extending into the valve body 31 and abuts against the sealing component 100 of the valve. The elastic member 35 is located between the valve bonnet 34 and the sealing component 100 of the valve. A first end of the elastic member 35 abuts against the valve bonnet 34, and a second end of the elastic member 35 abuts against the sealing component 100 of the valve. In this way, an arrangement of the elastic member 35 may provide a support for the sealing component 100 of the valve. Thus, a movement of the sealing component 100 of the valve may be facilitated, and a smoothness of the movement of the sealing component 100 of the valve may be improved.

Furthermore, the elastic member 35 includes a planar spring 36. Due to a simple structure of the planar spring 36, it is convenient to install and disassemble the planar spring 36, and during an installation, a relatively large installation deviation may be allowed. In addition, the planar spring 36 may better cooperate with the sealing component 100 of the valve to provide a support. Moreover, the planar spring 36 may have a long service life, a good cushioning effect and a strong bearing capacity.

Specifically, the elastic member 35 includes a deformation segment 351 and a mounting segment 352. The deformation segment 351 includes at least one deformation unit 3511. The deformation element 3511 is U-shaped, and at least one deformation unit 3511 is sequentially connected to define a substantially corrugated deformation segment 351. The mounting segment 352 is located at an end of the deformation segment 351, connected to the deformation segment 351, and located in the same horizontal plane as the deformation segment 351. The sealing component 100 of the valve abuts against the mounting segment 352, so that the mounting segment 352 may better cooperate with the sealing component 100 of the valve, thus facilitating an assembly.

Referring to FIG. 1 and FIG. 13, the sealing component 100 of the valve includes a mounting portion 231. The mounting segment 352 includes a recessed unit 3521 that is depressed along a direction away from the sealing component 100 of the valve, and a peripheral side of the mounting portion 231 abuts against the recessed unit 3521. A shape of the recessed unit 3521 is matched with a shape of the peripheral side of the mounting portion 231. In this way, the mounting portion 231 is capable of abutting against the recessed unit 3521, so that a fast and stable installation may be realized. In addition, during an installation of the mounting portion 231, a misalignment may not occur, thereby improving a stability of an overall structure of the sealing component 100 of the valve and increasing a rapidity of the installation.

Referring to FIG. 1 and FIG. 13, a mounting groove 341 is located on the valve bonnet 34. A fitting groove 2311 is located on an outer side wall of the mounting portion 231. At least a part of the elastic member 35 is installed in the mounting groove 341. In addition, a first end of the elastic member 35 abuts against the valve bonnet 34, and a second end of the elastic member 35 is installed in the fitting groove 2311. In this way, an installation of the elastic member 35 may be facilitated, and the elastic member 35 may be limited. In addition, the elastic member 35 can better cooperate with the fitting groove 2311 to provide a better support for the sealing component 100 of the valve, such that the sealing component 100 of the valve can move stably.

In the present invention, the valve body 31 is connected to the valve bonnet 34 by means of an ultrasonic welding or a hot melt connection. During an ultrasonic welding, high-frequency vibration waves are transmitted to surfaces of the valve body 31 and the valve bonnet 34, and under pressure, the surfaces of the valve body 31 and the valve bonnet 34 may rub against each other to define a fusion between molecular layers. The ultrasonic welding may have characteristics of a fast welding speed, a short welding time, a high welding strength, and a good sealing performance. In addition, the ultrasonic welding may be cost effective, clean and pollution-free. Meanwhile, the hot melt connection may have advantages such as a simple connection, a long service life, and an ability of resisting corrosion.

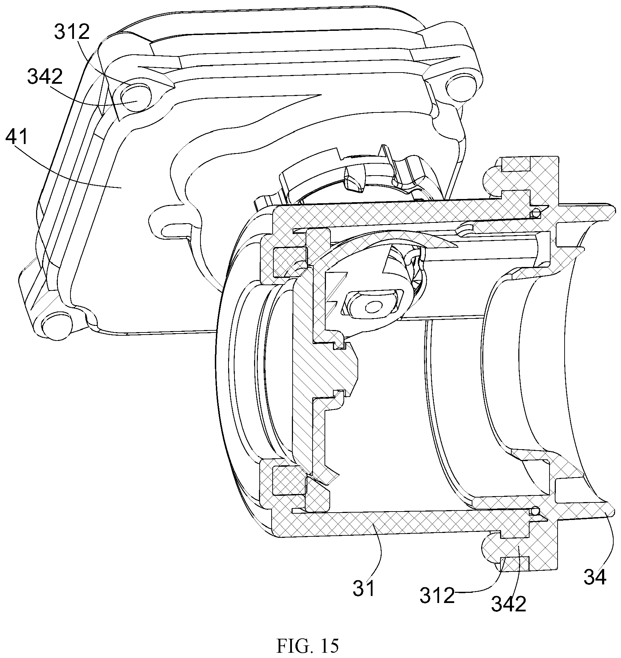

Referring to FIG. 15, specifically, the valve bonnet 34 is provided with a cylindrical convex block 342, and the valve body 31 is provided with a through hole 312. The cylindrical convex block 342 is capable of extending through the through hole 312. An end of the convex block 342 may be deformed into a mushroom head shape by an ultrasonic welding or a hot melt connection, so that the valve bonnet 34 and the valve body 31 may be fixed and connected to each other.

Referring to FIG. 1 and FIG. 15, the driving structure 40 includes a base 41 and an upper cover 44. The upper cover 44 is disposed on the base 41 and connected to the base 41 by means of an ultrasonic welding or a hot melt connection. In this way, the ultrasonic welding may have a fast welding speed, a short welding time, a high welding strength, and a good sealing performance. In addition, the ultrasonic welding may be cost effective, clean and pollution-free. Meanwhile, the hot melt connection has advantages such as a simple connection, a long service life, and an ability of resisting corrosion. A connection between the base 41 and the upper cover 44 is in a same manner as that between the valve bonnet 34 and the valve body 31, that is, the base 41 is also provided with a through hole 312, and the upper cover 44 is also provided with a convex block 342. Descriptions of specific connection methods will not be given herein.

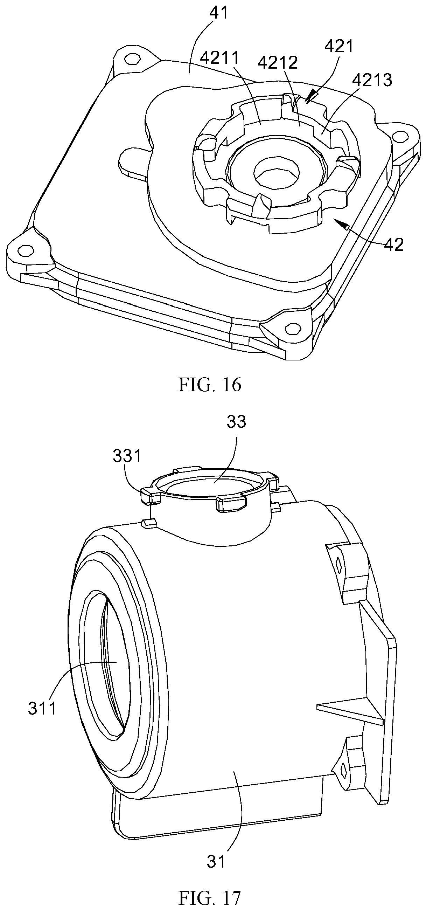

Referring to FIG. 16 and FIG. 17, an outer side wall of the valve body 31 is provided with a connecting portion 33, and a side close to the valve body 31 of the base 41 is provided with a fitting portion 42. The connecting portion 33 and the fitting portion 42 are coupled to and connected with each other. In this way, a quick connection between the valve body 31 and the base 41 may be realized.

Furthermore, a part of the connecting portion 33 protruding in a circumferential direction is defined as a connecting block 331. The fitting portion 42 includes a connecting groove structure 421. The connecting block 331 is capable of extending into the connecting groove structure 421 and being engaged with the connecting groove structure 421. The valve body 31 and the base 41 may be quickly engaged to each other by an arrangement of the connecting block 331 and the connecting groove structure 421. Thus, a simple structure may be implemented. Accordingly, a convenient and quick installation may be achieved.

Specifically, the connecting groove structure 421 includes a receiving groove 4211, a connecting groove 4212, and a resisting block 4213. The connecting block 331 is capable of extending into the receiving groove 4211. A side of the connecting groove 4212 is in communication with the receiving groove 4211. The resisting block 4213 is located at a side away from the receiving groove 4211 of the connecting groove 4212 and connected to a bottom of the connecting groove 4212. The connecting block 331 is capable of moving from the receiving groove 4211 to the connecting groove 4212 and abutting against the resisting block 4213. In addition, the connecting groove 4212 is capable of limiting a movement of the connecting block 331 along a height direction of the resisting block 4213. In this way, a simple structure of the connecting groove structure 421 and a quick installation may be realized, and thus it is convenient to limit the connecting block 331. Therefore, a quick installation between the valve body 31 and the base 41 may be realized.

In the present invention, the number of the connecting block 331 is four. Four connecting blocks 331 are evenly separated from each other in a circumference of the connecting portion 33, and the four connecting blocks 331 are located in the same horizontal plane. In addition, the number of the connecting groove structure 421 is four. Four connecting groove structures 421 are connected with each other in order, and in two adjacent connecting groove structures 421, a resisting block 4213 of one of the two adjacent connecting groove structures 421 is connected to a receiving groove 4211 of the other of the two adjacent connecting groove structures 421. In this way, a connection between the valve body 31 and the base 41 may be firmer, thereby enhancing a connection stability of the overall structure.

Of course, in other embodiments, the number of the connecting block 331 and the number of the connecting groove structure 421 may be other numbers rather than four as long as the same or similar effects can be achieved. For example, both the number of the connecting block 331 and the number of the connecting groove structure 421 may be five, six, or eight.

Referring to FIG. 1 and FIG. 13, the driving structure 40 has a mounting chamber 43. In addition, the driving structure 40 further includes an electric motor 45, a driving component 46, and a valve rod component 47. The electric motor 45 is mounted in the mounting chamber 43. The driving component 46 is installed in the mounting chamber 43 and connected to the electric motor 45. A first end of the valve rod component 47 is installed in the mounting chamber 43 and fitted with the driving component 46. A second end of the valve rod component 47 extends out of the mounting chamber 43 and further extends into the valve body 31 to be fitted with the mounting portion 231. The electric motor 45 is capable of driving the driving component 46 to move, and the driving component 46 is capable of driving the valve rod component 47 to rotate, thus enabling the valve rod component 47 to drive the sealing component 100 of the valve to rotate along an axis of the mounting portion 231, so as to open or seal the valve port 311.

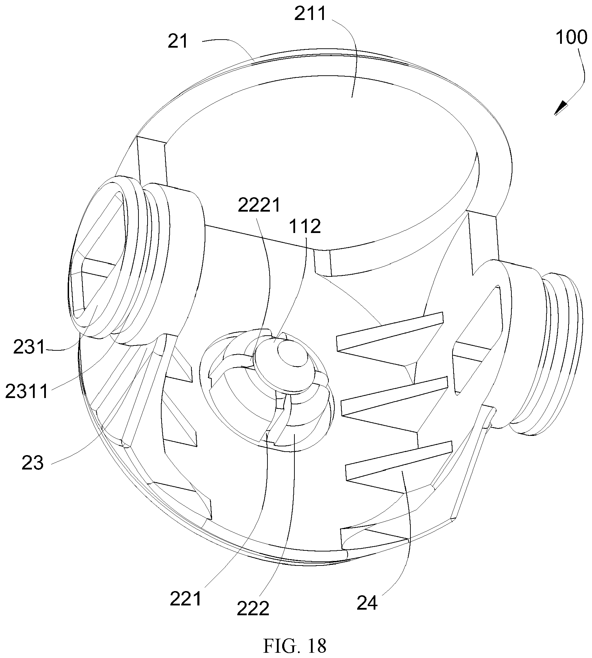

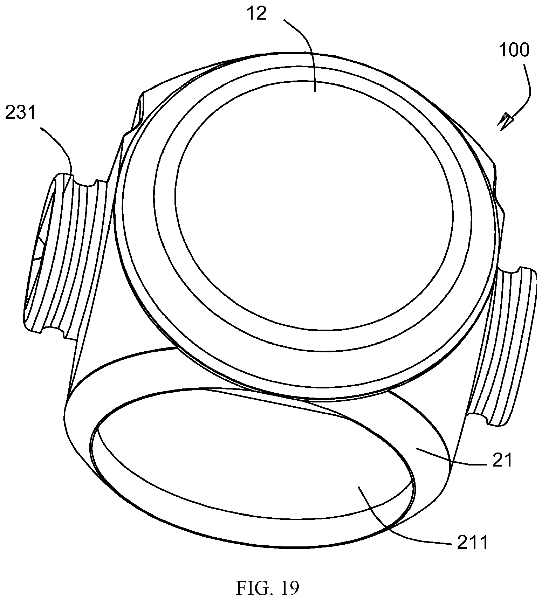

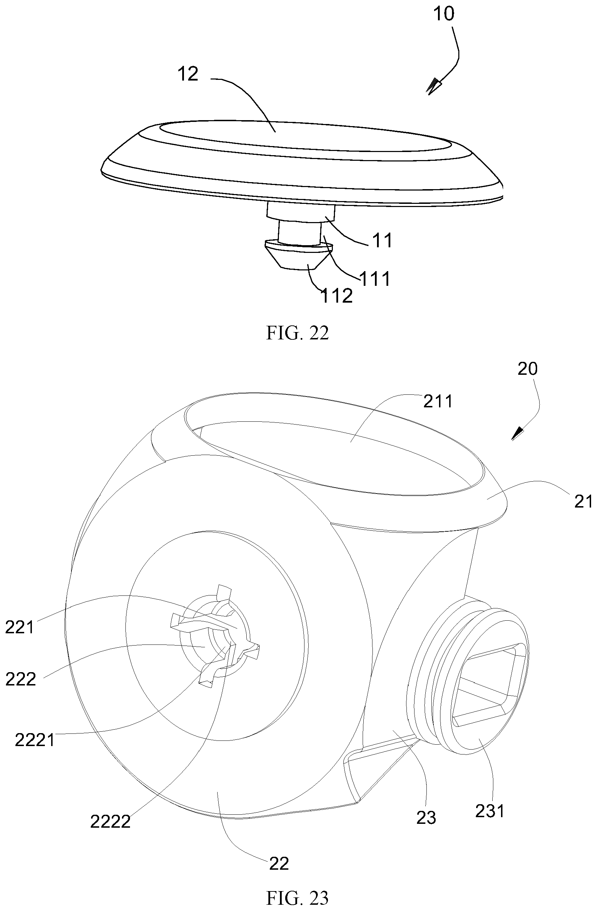

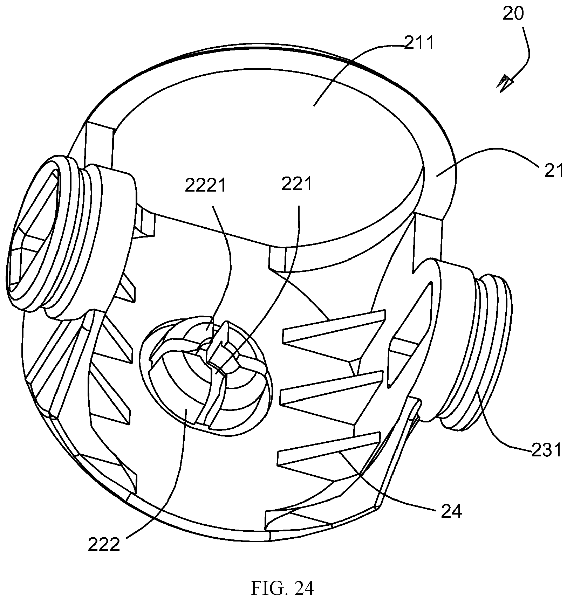

Referring to FIG. 18 to FIG. 24, the sealing component 100 of the valve of the present invention includes a rotating body 20 and a sealing structure 10. The rotating body 20 includes a flow-through surface 21 and a sealing surface 22 which are adjacent. In addition, an angle (not shown in the drawings) is defined between the flow-through surface 21 and the sealing surface 22. A flow-guiding hole 211 is located in the flow-through surface 21 for a medium to flow through. The sealing structure 10 is installed on the sealing surface 22 and capable of sealing the valve port 311 with a rotation of the rotating body 20.

In an embodiment, a material of the sealing structure 10 is a metal material. Since the sealing structure 10 is made of metal, the sealing structure 10 may have a high abrasion resistance, which may avoid wear of the sealing structure 10 due to repeated sealing of the valve port 311 by the driving of the rotating body 20, thereby prolonging a service life of the sealing component 100 of the valve. In addition, since the sealing structure 10 is made of metal, the sealing structure 10 is easy to be processed and manufactured. In addition, the sealing structure 10 made of metal is less likely to be deformed during processing, thus can be easily controlled in size and roundness. Therefore, a sealing performance of the sealing component 100 of the valve may be improved.

In another embodiment, not according to the invention, the material of the sealing structure 10 is a plastic material, and thus a cost is low.

In the present invention, an angle (not shown in the drawings) is defined between the flow-through surface 21 and the sealing surface 22, and the angle may be 90 degrees. When the valve body 31 is in an open state, a medium can flow out of the flow-guiding hole 211. At this time, the sealing component 100 of the valve is rotated at 90 degrees, the sealing structure 10 may seal the valve port 311, thereby blocking the flow of the medium. Of course, in other embodiments, the angle defined between the flow-through surface 21 and the sealing surface 22 may be set as required as long as the same function of opening or sealing the valve port 311 by rotation can be achieved. For example, the angle defined between the flow-through surface 21 and the sealing surface 22 may be at 85 degrees, 70 degrees, or 60 degrees.

Furthermore, the sealing structure 10 is detachably installed on the sealing surface 22. The sealing structure 10 and the rotating body 20 are arranged separately, so as to facilitate the processing and manufacture of the sealing structure 10. Moreover, it is convenient to replace the sealing structure 10 when necessary.

In an embodiment, alternatively, a material of the sealing structure 10 is stainless steel and is formed by computer numerical controlled (CNC) machining. The rotating body 20 is injection molded with a plastic material. If the sealing component 100 of the valve is all made of metal, the cost may be too high. By the sealing component 100 of the valve provided in the present invention, a sealing performance can be ensured, and a cost can be decreased.

Referring to FIG. 18 to FIG. 24, the sealing structure 10 includes a connecting column 11 and a sealing plate 12. The sealing plate 12 is configured for sealing the valve port 311, so as to block a flow of a medium. The connecting column 11 is disposed on a side surface of the sealing plate 12. A part of the sealing surface 22 depressing is defined as a fitting hole 221, and the connecting column 11 is capable of inserting into the fitting hole 221, enabling the sealing structure 10 to be installed on the sealing surface 22. Therefore, a connection between the sealing structure 10 and the rotating body 20 can be realized. Accordingly, it is convenient for the sealing structure 10 to seal the valve port 311 with a rotation of the rotating body 20.

Furthermore, an inner side of the sealing surface 22 is provided with a buckling portion 222 surrounding a circumference of the fitting hole 221 and protruding along an axis of the fitting hole 221. A clamping slot 111 is located on the connecting column 11. After the connecting column 11 inserts into the fitting hole 221, the buckling portion 222 is capable of clamping into the clamping slot 111 as the connecting column 11 is gradually extended, thereby preventing the connecting column 11 from detaching from the fitting hole 221. Accordingly, a stability of connection between the sealing structure 10 and the rotating body 20 can be enhanced.

Specifically, the inner side of the sealing surface 22 is provided with a plurality of buckling portions 222, and the plurality of buckling portions 222 are separated from each other in a circumference of the fitting hole 221, so that the plurality of buckling portions 222 can further enhance a stable connection between the sealing structure 10 and the rotating body 20. In the present invention, the number of the buckle portions 222 is four. Of course, in other embodiments, the number of the buckle portion 222 may be changed as required as long as the stable connection between the sealing structure 10 and the rotating body 20 can be further enhanced. For example, the number of the buckle portion 222 may be three, five, or six.

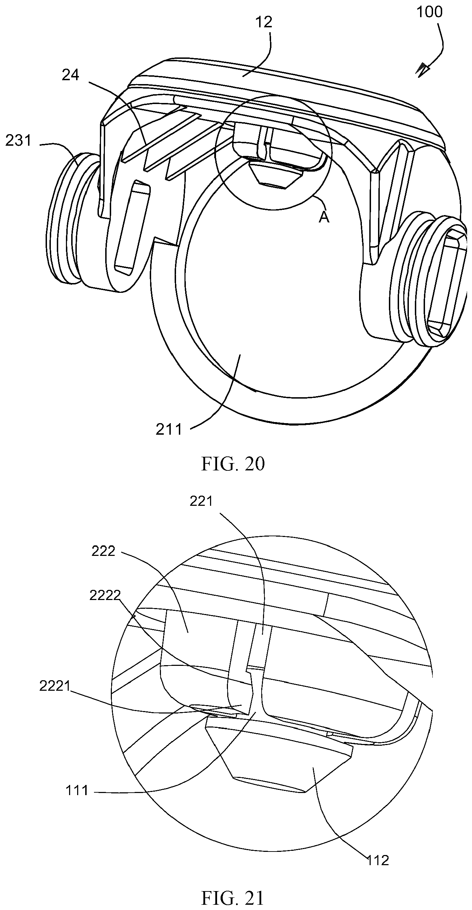

Referring to FIG. 20 to FIG. 21, an end away from the sealing surface 22 of the buckling portion 222 is provided with a convex portion 2221 along a radial direction of the fitting hole 221. After the connecting column 11 inserts into the fitting hole 221, the connecting column 11 may press the convex portion 2221, such that the buckling portion 222 is deformed. Therefore, the convex portion 2221 may be forced to clamp into the clamping slot 111 during the connecting column 11 gradually inserting into the fitting hole 221, thus forming a buckle structure. Accordingly, a connection strength between the buckling portion 222 and the connecting column 11 may be enhanced, preventing the connecting column 11 from easily detaching from the fitting hole 221.

Furthermore, the convex portion 2221 has a guiding surface 2222. During the connecting column 11 inserting into the fitting hole 221, the connecting column 11 is capable of pressing the buckle portion 222 under a guiding of the guiding surface 2222, enabling the buckle portion 222 to be deformed. Due to a guidance of the guiding surface 2222 to the connecting column 11, it is convenient for the connecting column 11 to insert into the fitting hole 221 and press the buckling portion 222, thus forcing the buckling portion 222 to be deformed. The connecting column 11 continues to extend in until the convex portion 2221 is clamped into the clamping slot 111. Therefore, a connection between the sealing structure 10 and the rotating body 20 may be realized.

Specifically, an end away from the sealing plate 12 of the connecting column 11 is provided with a guiding portion 112. The guiding portion 112 is configured to guide the connecting column 11 to insert into the fitting hole 221. Because of the guidance of the guiding portion 112, the connecting column 11 is capable of entering the fitting hole 221 more smoothly, such that the buckling portion 222 may be couple to the clamping slot 111. In addition, as the guiding portion 112 gradually inserts into the fitting hole 221, the guiding portion 112 firstly cooperates with the guiding surface 2222, and then presses the buckling portion 222 while continuing to insert into the fitting hole 221 by the guidance of the guiding surface 2222. The guiding portion 112 further extends into the fitting hole 221 and presses the buckling portion 222 by the guidance of the guiding portion 112, forcing the buckling portion 222 to spread out and be deformed until the convex portion 2221 is clamped into the clamping slot 111. Therefore, the connecting column 11 and the fitting hole 221 may be more quickly and easily connected by a simple structure, which greatly reduces a difficulty of installation.

Alternatively, the guiding portion 112 is in a shape of a circular truncated cone. An inner diameter of an end away from the sealing surface 22 of the guiding portion 112 is less than an inner diameter of an end close to the sealing surface 22 of the guiding portion 112. Since the guiding portion 112 is in the shape of a circular truncated cone, the guidance of the guiding portion 112 may be enhanced and an installation thereof may be facilitated. In addition, when the guiding portion 112 gradually inserts into the fitting hole 221, a press strength of a circumferential side of the guiding portion 112 on the buckling portion 222 gradually increases, thus the buckling portion 222 is deformed. Therefore, the convex portion 2221 is clamped into the clamping slot 111, thereby realizing a connection between the sealing structure 10 and the rotating body 20. Of course, in other embodiments, the guiding portion 112 may be in other different shapes as long as the guiding portion 112 can play the same guiding function. For example, the guiding portion 112 may be in a semi-elliptical shape.

Referring to FIG. 18 to FIG. 19, the rotating body 20 further includes two mounting surfaces 23. The mounting surface 23 and the flow-through surface 21 are perpendicular to each other, the flow-through surface 21 and the sealing surface 22 are perpendicular to each other, and the mounting surface 23 and the sealing surface 22 are perpendicular to each other. Two mounting portions 231 are provided on the two mounting surfaces 23, respectively. The mounting portion 231 is configured for connecting the valve rod component 47 which is capable of inserting into the mounting portion 231. A rotation of the valve rod component 47 may drive the sealing component 100 of the valve to rotate, thus sealing or opening the valve port 311.

Furthermore, the rotating body 20 is further provided with a plurality of reinforcement bars 24. The plurality of reinforcement bars 24 are symmetrically distributed on a side close to an axis of the flow-through surface 21 of each mounting surface 23, and connected to sides away from the sealing plate 12 of the mounting surface 23 and the sealing surface 22, respectively, so as to strengthen an overall structural strength of the rotating body 20.

In addition, it should be noted that the words "first" and "second", etc., are used herein to define components/elements only for the convenience of distinguishing corresponding components/elements. Unless otherwise stated, the above words have no special meaning, so that they cannot be understood as limiting the scope of protection of the present invention.

The technical features of the above embodiments may be combined in any combination. As long as there is no contradiction between the combinations of these technical features, all should be considered as within the scope of the present invention which is defined by the appended claims.

## Claims

1. A ball valve (101) comprising a valve body structure (30) and a driving structure (40), the valve body structure (30) comprising a valve body (31) and a sealing component (100) of a valve, the valve body (31) being provided with a valve port (311), the sealing component (100) of the valve being installed in the valve body (31) and capable of opening or sealing the valve port (311), and at least a part of the driving structure (40) being capable of extending into the valve body (31) and being connected to the sealing component (100) of the valve to drive the sealing component (100) of the valve to move in the valve body (31),
the valve body structure (30) further comprises a sealing member (32), which is surrounding the valve port (311) and configured to cooperate with the sealing component (100) of the valve to seal the valve port (311), wherein a longitudinal cross section of the sealing member (32) is in a shape of any one of a convex polygon, an ellipse, a circle, a D-shape, or a waist shape;
the sealing component (100) of the valve comprises a rotating body (20) and a sealing structure (10) made of a metal material,
the rotating body (20) comprises a flow-through surface (21) and a sealing surface (22) which are adjacent, an angle is defined between the flow-through surface (21) and the sealing surface (22), and a flow-guiding hole (211) is located in the flow-through surface (21) for a medium to flow through, and
the sealing structure (10) is installed on the sealing surface (22) and capable of sealing the valve port (311) with a rotation of the rotating body (20);
**characterized in that**,
the sealing structure (10) comprises:
a sealing plate (12) configured for sealing the valve port (311); and
a connecting column (11) disposed on a side surface of the sealing plate (12),
wherein a part of the sealing surface (22) depressing is defined as a fitting hole (221), and the connecting column (11) is capable of inserting into the fitting hole (221), enabling the sealing structure (10) to be installed on the sealing surface (22);
an inner side of the sealing surface (22) is provided with a buckling portion (222) surrounding a circumference of the fitting hole (221) and protruding along an axis of the fitting hole (221), and a clamping slot (111) is located on the connecting column (11);
after the connecting column (11) inserts into the fitting hole (221), the buckling portion (222) is capable of clamping into the clamping slot (111); and
the inner side of the sealing surface (22) is provided with a plurality of buckling portions (222), and the plurality of buckling portions (222) are separated from each other in a circumference of the fitting hole (221).

2. The ball valve (101) of claim 1, **characterized in that** the valve body structure (30) further comprises a valve bonnet (34) and an elastic member (35), wherein
the valve bonnet (34) is installed on an end away from the valve port (311) of the valve body (31), and at least a part of the valve bonnet (34) is capable of extending into the valve body (31) and abuts against the sealing component (100) of the valve; and
the elastic member (35) is located between the valve bonnet (34) and the sealing component (100) of the valve, a first end of the elastic member (35) abuts against the valve bonnet (34), and a second end of the elastic member (35) abuts against the sealing component (100) of the valve.

3. The ball valve (101) of claim 2, **characterized in that** the elastic member (35) comprises a planar spring (36).

4. The ball valve (101) of claim 2, **characterized in that** the elastic member (35) comprises:
a deformation segment (351) comprising at least one deformation unit (3511);
a mounting segment (352) located at an end of at least one deformation segment (351), connected to the at least one deformation segment (351), and located in the same horizontal plane as the at least one deformation segment (351),
wherein the sealing component (100) of the valve abuts against the mounting segment (352);
the sealing component (100) of the valve comprises a mounting portion (231), and the mounting segment (352) of the elastic member (35) comprises a recessed unit (3521),
wherein the recessed unit (3521) is depressed along a direction away from the sealing component (100) of the valve, a peripheral side of the mounting portion (231) abuts against the recessed unit (3521), and a shape of the recessed unit (3521) is matched with a shape of the peripheral side of the mounting portion (231); and
a mounting groove (341) is located on the valve bonnet (34), a fitting groove (2311) is located on an outer side wall of the mounting portion (231), at least a part of the elastic member (35) is installed in the mounting groove (341), a first end of the elastic member (35) abuts against the valve bonnet (34), and a second end of the elastic member (35) is installed in the fitting groove (2311).

5. The ball valve (101) of claim 2, **characterized in that** the valve body (31) is connected to the valve bonnet (34) by means of an ultrasonic welding or a hot melt connection.

6. The ball valve (101) of claim 1, **characterized in that** the driving structure (40) comprises a base (41) and an upper cover (44), and the upper cover (44) is disposed on the base (41) and connected to the base (41) by means of an ultrasonic welding or a hot melt connection;
an outer side wall of the valve body (31) is provided with a connecting portion (33), a side close to the valve body (31) of the base (41) is provided with a fitting portion (42), and the connecting portion (33) and the fitting portion (42) are coupled to and connected with each other;
a part of the connecting portion (33) protruding in a circumferential direction is defined as a connecting block (331), the fitting portion (42) comprises a connecting groove structure (421), and the connecting block (331) is capable of extending into the connecting groove structure (421) and engaging with the connecting groove structure (421);
the connecting groove structure (421) comprises:
a receiving groove (4211), wherein the connecting block (331) is capable of extending into the receiving groove (4211);
a connecting groove (4212), a side of which is in communication with the receiving groove (4211); and
a resisting block (4213) located at a side away from the receiving groove (4211) of the connecting groove (4212) and connected to a bottom of the connecting groove (4212),
wherein the connecting block (331) is capable of moving from the receiving groove (4211) to the connecting groove (4212) and abutting against the resisting block (4213), and the connecting groove (4212) is capable of limiting a movement of the connecting block (331) along a height direction of the resisting block (4213);
the number of the connecting block (331) is four, four connecting blocks (331) are evenly separated from each other in a circumference of the connecting portion (33), and the four connecting blocks (331) are located in the same horizontal plane; and
the number of the connecting groove structure (421) is four, four connecting groove structures (421) are connected with each other in order, and in two adjacent connecting groove structures (421), a resisting block (4213) of one of the two adjacent connecting groove structures (421) is connected to a receiving groove (4211) of the other of the two adjacent connecting groove structures (421).

7. The ball valve (101) of claim 4, **characterized in that** the driving structure (40) has a mounting chamber (43), and the driving structure (40) further comprises:
an electric motor (45) installed in the mounting chamber (43);
a driving component (46) installed in the mounting chamber (43) and connected to the electric motor (45); and
a valve rod component (47), a first end of which is installed in the mounting chamber (43) and fitted with the driving component (46); a second end of which extends out of the mounting chamber (43) and further extends into the valve body (31) to be fitted with the mounting portion (231),
wherein the electric motor (45) is capable of driving the driving component (46) to move, the driving component (46) is capable of driving the valve rod component (47) to rotate, enabling the valve rod component (47) to drive the sealing component (100) of the valve to rotate along an axis of the mounting portion (231), so as to open or seal the valve port (311).

8. The ball valve (101) of claim 1, **characterized in that** an end away from the sealing surface (22) of the buckling portion (222) is provided with a convex portion (2221) protruding along a radial direction of the fitting hole (221), and the convex portion (2221) is capable of clamping into the clamping slot (111) after the connecting column (11) inserts into the fitting hole (221); and
the convex portion (2221) has a guiding surface (2222), and during the connecting column (11) inserting into the fitting hole (221), the connecting column (11) is capable of pressing the buckling portion (222) under a guiding of the guiding surface (2222), enabling the buckling portion (222) to be deformed.

9. The ball valve (101) of claim 1, **characterized in that** an end away from the sealing plate (12) of the connecting column (11) is provided with a guiding portion (112), and the guiding portion (112) is configured to guide the connecting column (11) to insert into the fitting hole (221); and
the guiding portion (112) is in a shape of a circular truncated cone, and an inner diameter of an end away from the sealing surface (22) of the guiding portion (112) is less than an inner diameter of an end close to the sealing surface (22) of the guiding portion (112).

10. A sealing component (100) for a valve, suitable for being installed in a valve body (31), the valve body (31) having a valve port (311), the sealing component (100) of the valve comprises a rotating body (20) and a sealing structure (10) made of a metal material, the rotating body (20) is provided with a flow-through surface (21) and a sealing surface (22) which are adjacent, an angle is defined between the flow-through surface (21) and the sealing surface (22), the flow-through surface (21) is provided with a flow-guiding hole (211) for the medium to flow through, and the sealing structure (10) made of the metal material is installed on the sealing surface (22) and capable of sealing the valve port (311) with a rotation of the rotating body (20);
**characterized in that**,
the sealing structure (10) made of the metal material comprises:
a sealing plate (12) configured for sealing the valve body (31); and
a connecting column (11) disposed on a side surface of the sealing plate (12),
wherein a part of the sealing surface (22) depressing is defined as a fitting hole (221), and the connecting column (11) is capable of inserting into the fitting hole (221), enabling the sealing structure (10) made of the metal material to be installed on the sealing surface (22);
an inner side of the sealing surface (22) is provided with a buckling portion (222) surrounding a circumference of the fitting hole (221) and protruding along an axis of the fitting hole (221), and a clamping slot (111) is located on the connecting column (11);
after the connecting column (11) inserts into the fitting hole (221), the buckling portion (222) is capable of clamping into the clamping slot (111); and
the inner side of the sealing surface (22) is provided with a plurality of buckling portions (222), and the plurality of buckling portions (222) are separated from each other in a circumference of the fitting hole (221).

11. The sealing component (100) of the valve of claim 10, **characterized in that** an end away from the sealing surface (22) of the buckling portion (222) is provided with a convex portion (2221) protruding along a radial direction of the fitting hole (221), and the convex portion (2221) is capable of clamping into the clamping slot (111) after the connecting column (11) inserts into the fitting hole (221); and
the convex portion (2221) has a guiding surface (2222), and during the connecting column (11) inserting into the fitting hole (221), the connecting column (11) is capable of pressing the buckling portion (222) under a guiding of the guiding surface (2222), enabling the buckling portion (222) to be deformed.

12. The sealing component (100) of the valve of claim 10, **characterized in that** an end away from the sealing plate (12) of the connecting column (11) is provided with a guiding portion (112), and the guiding portion (112) is configured to guide the connecting column (11) to insert into the fitting hole (221); and
the guiding portion (112) is in a shape of a circular truncated cone, and an inner diameter of an end away from the sealing surface (22) of the guiding portion (112) is less than an inner diameter of an end close to the sealing surface (22) of the guiding portion (112).

## Patentansprüche

1. Kugelventil (101), umfassend eine Ventilkörperstruktur (30) und eine Antriebsstruktur (40), wobei die Ventilkörperstruktur (30) einen Ventilkörper (31) und eine Verschlusskomponente (100) eines Ventils umfasst, wobei der Ventilkörper (31) mit einer Ventilöffnung (311) versehen ist, die Verschlusskomponente (100) des Ventils im Ventilkörper (31) installiert und fähig ist, die Ventilöffnung (311) zu öffnen und zu verschließen, und wenigstens ein Teil der Antriebsstruktur (40) fähig ist, sich in den Ventilkörper (31) zu erstrecken und mit der Verschlusskomponente (100) des Ventils verbunden zu sein, um die Verschlusskomponente (100) des Ventils im Ventilkörper (31) zu bewegen,
wobei die Ventilkörperstruktur (30) ferner eine Verschlusselement (32) umfasst, die die Ventilöffnung (311) umgibt und dazu ausgestaltet ist, mit der Verschlusskomponente (100) des Ventils zusammenzuwirken, um die Ventilöffnung (311) zu verschließen, wobei ein Längsschnitt des Verschlusselements (32) eine beliebige Form von einem konvexen Vieleck, einer Ellipse, einem Kreis, einer D-Form oder einer Sanduhrform aufweist;
wobei die Verschlusskomponente (100) des Ventils einen Drehkörper (20) und eine Verschlussstruktur (10) aus einem Metallmaterial umfasst,
wobei der Drehkörper (20) eine Durchflussfläche (21) und eine Verschlussfläche (22) umfasst, die zueinander benachbart sind, wobei zwischen der Durchflussfläche (21) und der Verschlussfläche (22) ein Winkel definiert ist und ein Flusslenkungsloch (211) in der Durchflussfläche (21) angeordnet ist, durch das ein Medium hindurchfließen kann, und
wobei die Verschlussstruktur (10) an der Verschlussfläche (22) installiert ist und fähig ist, die Ventilöffnung (311) mit einer Drehung des Drehkörpers (20) zu verschließen;
**dadurch gekennzeichnet, dass**
die Verschlussstruktur (10) umfasst:
eine Verschlussplatte (12), die dazu ausgestaltet ist, die Ventilöffnung (311) zu verschließen; und
eine Verbindungssäule (11), die an einer Seitenfläche der Verschlussplatte (12) angeordnet ist,
wobei ein vertiefter Teil der Verschlussfläche (22) als ein Passloch (221) definiert ist und die Verbindungssäule (11) in das Passloch (221) einführbar ist, sodass die Verschlussstruktur (10) an der Verschlussfläche (22) installiert werden kann;
wobei eine Innenseite der Verschlussfläche (22) mit einem Wölbungsabschnitt (222) versehen ist, der einen Umfang des Passloch (221) umgibt und an einer Achse des Passlochs (221) vorspringt, und ein Klemmschlitz (111) an der Verbindungssäule (11) angeordnet ist;
wobei der Wölbungsabschnitt (222) nach dem Einführen der Verbindungssäule (11) in das Passloch (221) in den Klemmschlitz (111) geklemmt werden kann; und
wobei die Innenseite der Verschlussfläche (22) mit einer Vielzahl von Wölbungsabschnitten (222) versehen ist und die Vielzahl von Wölbungsabschnitten (222) am Umfang des Passlochs (221) voneinander beabstandet ist.

2. Kugelventil (101) nach Anspruch 1, **dadurch gekennzeichnet, dass** die Ventilkörperstruktur (30) ferner einen Ventilaufsatz (34) und ein elastisches Element (35) umfasst, wobei
der Ventilaufsatz (34) an einem von der Ventilöffnung (311) des Ventilkörpers (31) entfernten Ende installiert ist und wenigstens ein Teil des Ventilaufsatzes (34) fähig ist, sich in den Ventilkörper (31) zu erstrecken, und an der Verschlusskomponente (100) des Ventils anliegt; und
das elastische Element (35) zwischen dem Ventilaufsatz (34) und der Verschlusskomponente (100) des Ventils angeordnet ist, wobei ein erstes Ende des elastischen Elements (35) am Ventilaufsatz (34) anliegt und ein zweites Ende des elastischen Elements (35) an der Verschlusskomponente (100) des Ventils anliegt.

3. Kugelventil (101) nach Anspruch 2, **dadurch gekennzeichnet, dass** das elastische Element (35) eine flache Feder (36) umfasst.

4. Kugelventil (101) nach Anspruch 2, **dadurch gekennzeichnet, dass** das elastische Element (35) umfasst:
ein Verformungssegment (351), das wenigstens eine Verformungseinheit (3511) umfasst;
ein Anbringungssegment (352), das an einem Ende von wenigstens einem Verformungssegment (351) angeordnet ist, mit dem wenigstens einen Verformungssegment (351) verbunden ist und in derselben horizontalen Ebene wie das wenigstens eine Verformungssegment (351) liegt,
wobei die Verschlusskomponente (100) des Ventils an dem Anbringungssegment (352) anliegt;
wobei die Verschlusskomponente (100) des Ventils einen Anbringungsabschnitt (231) umfasst und das Anbringungssegment (352) des elastischen Elements (35) eine Ausnehmungseinheit (3521) umfasst,
wobei die Ausnehmungseinheit (3521) in einer Richtung weg von der Verschlusskomponente (100) des Ventils vertieft ist, eine Umfangsseite des Anbringungsabschnitts (231) an der Ausnehmungseinheit (3521) anliegt und eine Form der Ausnehmungseinheit (3521) mit einer Form der Umfangsseite des Anbringungsabschnitts (231) übereinstimmt; und
eine Anbringungsnut (341) am Ventilaufsatz (34) angeordnet ist, eine Passnut (2311) an einer Außenseitenwand des Anbringungsabschnitts (231) angeordnet ist, wenigstens ein Teil des elastischen Elements (35) in der Anbringungsnut (341) installiert ist, ein erstes Ende des elastischen Elements (35) am Ventilaufsatz (34) anliegt und ein zweites Ende des elastischen Elements (35) in der Passnut (2311) installiert ist.

5. Kugelventil (101) nach Anspruch 2, **dadurch gekennzeichnet, dass** der Ventilkörper (31) mittels einer Ultraschallschweiß- oder Schmelzverbindung mit dem Ventilaufsatz (34) verbunden ist.

6. Kugelventil (101) nach Anspruch 1, **dadurch gekennzeichnet, dass** die Antriebsstruktur (40) einen Sockel (41) und eine obere Abdeckung (44) umfasst, wobei die obere Abdeckung (44) auf dem Sockel (41) angeordnet und mittels einer Ultraschallschweiß- oder Schmelzverbindung mit dem Sockel (41) verbunden ist;
wobei eine Außenseitenwand des Ventilskörper (31) mit einem Verbindungsabschnitt (33) versehen ist, eine Seite des Sockels (41) nah am Ventilkörper (31) mit einem Passabschnitt (42) versehen ist und der Verbindungsabschnitt (33) und der Passabschnitt (42) aneinander gekoppelt und miteinander verbunden sind;
wobei ein Teil des Verbindungsabschnitts (33), der in Umfangsrichtung vorspringt, als ein Verbindungsblock (331) definiert ist, der Passabschnitt (42) eine Verbindungsnutstruktur (421) umfasst und der Verbindungsblock (331) fähig ist, sich in die Verbindungsnutstruktur (421) zu erstrecken und mit der Verbindungsnutstruktur (421) in Eingriff zu treten;
wobei die Verbindungsnutstruktur (421) umfasst:
eine Aufnahmenut (4211), wobei der Verbindungsblock (331) fähig ist, sich in die Aufnahmenut (4211) zu erstrecken;
eine Verbindungsnut (4212), deren eine Seite mit der Aufnahmenut (4211) in Verbindung steht; und
einen Widerstandsblock (4213), der an einer von der Aufnahmenut (4211) entfernten Seite der Verbindungsnut (4212) angeordnet und mit einem Boden der Verbindungsnut (4212) verbunden ist,
wobei der Verbindungsblock (331) fähig ist, sich von der Aufnahmenut (4211) zur Verbindungsnut (4212) zu bewegen und in Anlage an den Widerstandsblock (4213) zu gelangen, und die Verbindungsnut (4212) fähig ist, eine Bewegung des Verbindungsblocks (331) in einer Höhenrichtung des Widerstandsblocks (4213) zu begrenzen;
wobei der Verbindungsblock (331) in einer Anzahl von vier vorliegt, die vier Verbindungsblöcke (331) an einem Umfang des Verbindungsabschnitts (33) gleichmäßig voneinander beabstandet sind und die vier Verbindungsblöcke (331) in derselben horizontalen Ebene liegen; und
wobei die Verbindungsnutstruktur (421) in einer Anzahl von vier vorliegt, die vier Verbindungsnutstrukturen (421) der Reihe nach miteinander verbunden sind und in zwei benachbarten Verbindungsnutstrukturen (421) ein Widerstandsblock (4213) von einer der zwei benachbarten Verbindungsnutstrukturen (421) mit der Aufnahmenut (4211) der anderen der zwei benachbarten Verbindungsnutstrukturen (421) verbunden ist.

7. Kugelventil (101) nach Anspruch 4, **dadurch gekennzeichnet, dass** die Antriebsstruktur (40) eine Anbringungskammer (43) aufweist und die Antriebsstruktur (40) ferner umfasst:
einen Elektromotor (45), der in der Anbringungskammer (43) installiert ist;
eine Antriebskomponente (46), die in der Anbringungskammer (43) installiert und mit dem Elektromotor (45) verbunden ist; und
eine Ventilschaftkomponente (47), deren erstes Ende in der Anbringungskammer (43) installiert und mit der Antriebskomponente (46) zusammengesetzt ist; und deren zweites Ende sich aus der Anbringungskammer (43) heraus und weiter in den Ventilkörper (31) hinein erstreckt, um mit dem Anbringungsabschnitt (231) zusammengesetzt zu sein,
wobei der Elektromotor (45) fähig ist, die Antriebskomponente (46) zur Bewegung anzutreiben, und die Antriebskomponente (46) fähig ist, die Ventilschaftkomponente (47) drehend anzutreiben, wodurch die Ventilschaftkomponente (47) die Verschlusskomponente (100) des Ventils so antreiben kann, dass sie sich an einer Achse des Anbringungsabschnitt (231) dreht, um die Ventilöffnung (311) zu öffnen oder zu verschließen.

8. Kugelventil (101) nach Anspruch 1, **dadurch gekennzeichnet, dass** ein von der Verschlussfläche (22) entferntes Ende des Wölbungsabschnitts (222) mit einem konvexen Abschnitt (2221) versehen ist, der in einer radialen Richtung des Passlochs (221) vorspringt, und der konvexe Abschnitt (2221) fähig ist, nach dem Einführen der Verbindungssäule (11) in das Passloch (221) in den Klemmschlitz (111) geklemmt zu werden; und
wobei der konvexe Abschnitt (2221) eine Führungsfläche (2222) aufweist und die Verbindungssäule (11) während des Einführens der Verbindungssäule (11) in das Passloch (221) fähig ist, den Wölbungsabschnitt (222) unter Führung durch die Führungsfläche (2222) zu drücken, sodass der Wölbungsabschnitt (222) verformt werden kann.

9. Kugelventil (101) nach Anspruch 1, **dadurch gekennzeichnet, dass** ein von der Verschlussplatte (12) entferntes Ende der Verbindungssäule (11) mit einem Führungsabschnitt (112) versehen ist und der Führungsabschnitt (112) dazu ausgestaltet ist, die Verbindungssäule (11) beim Einführen in das Passloch (221) zu führen; und
wobei der Führungsabschnitt (112) die Form eines kreisförmigen Kegelstumpfs aufweist und ein Innendurchmesser eines von der Verschlussfläche (22) entfernten Endes des Führungsabschnitts (112) kleiner als ein Innendurchmesser eines nah an der Verschlussfläche (22) liegenden Endes des Führungsabschnitts (112) ist.

10. Verschlusskomponente (100) für ein Ventil, die geeignet ist, um in einem Ventilkörper (31) installiert zu sein, wobei der Ventilkörper (31) eine Ventilöffnung (311) aufweist, die Verschlusskomponente (100) des Ventils eine Drehkörper (20) und eine Verschlussstruktur (10) aus einem Metallmaterial umfasst, der Drehkörper (20) mit einer Durchflussfläche (21) und einer Verschlussfläche (22) versehen ist, die zueinander benachbart sind, zwischen der Durchflussfläche (21) und der Verschlussfläche (22) ein Winkel definiert ist, die Durchflussfläche (21) mit einem Flusslenkungsloch (211) versehen ist, durch das ein Medium hindurchfließen kann, und die Verschlussstruktur (10) aus Metallmaterial an der Verschlussfläche (22) installiert ist und fähig ist, die Ventilöffnung (311) mit einer Drehung des Drehkörpers (20) zu verschließen;
**dadurch gekennzeichnet, dass**
die Verschlussstruktur (10) aus Metallmaterial umfasst:
eine Verschlussplatte (12), die dazu ausgestaltet ist, den Ventilkörper (31) zu verschließen; und
eine Verbindungssäule (11), die an einer Seitenfläche der Verschlussplatte (12) angeordnet ist,
wobei ein vertiefter Teil der Verschlussfläche (22) als ein Passloch (221) definiert ist und die Verbindungssäule (11) in das Passloch (221) einführbar ist, sodass die Verschlussstruktur (10) aus Metallmaterial an der Verschlussfläche (22) installiert werden kann;
wobei eine Innenseite der Verschlussfläche (22) mit einem Wölbungsabschnitt (222) versehen ist, der einen Umfang des Passloch (221) umgibt und an einer Achse des Passlochs (221) vorspringt, und ein Klemmschlitz (111) an der Verbindungssäule (11) angeordnet ist;
wobei der Wölbungsabschnitt (222) nach dem Einführen der Verbindungssäule (11) in das Passloch (221) in den Klemmschlitz (111) geklemmt werden kann; und
wobei die Innenseite der Verschlussfläche (22) mit einer Vielzahl von Wölbungsabschnitten (222) versehen ist und die Vielzahl von Wölbungsabschnitten (222) am Umfang des Passlochs (221) voneinander beabstandet ist.

11. Verschlusskomponente (100) für ein Ventil nach Anspruch 10, **dadurch gekennzeichnet, dass** ein von der Verschlussfläche (22) entferntes Ende des Wölbungsabschnitts (222) mit einem konvexen Abschnitt (2221) versehen ist, der in einer radialen Richtung des Passlochs (221) vorspringt, und der konvexe Abschnitt (2221) fähig ist, nach dem Einführen der Verbindungssäule (11) in das Passloch (221) in den Klemmschlitz (111) geklemmt zu werden; und
wobei der konvexe Abschnitt (2221) eine Führungsfläche (2222) aufweist und die Verbindungssäule (11) während des Einführens der Verbindungssäule (11) in das Passloch (221) fähig ist, den Wölbungsabschnitt (222) unter Führung durch die Führungsfläche (2222) zu drücken, sodass der Wölbungsabschnitt (222) verformt werden kann.

12. Verschlusskomponente (100) für ein Ventil nach Anspruch 10, **dadurch gekennzeichnet, dass** ein von der Verschlussplatte (12) entferntes Ende der Verbindungssäule (11) mit einem Führungsabschnitt (112) versehen ist und der Führungsabschnitt (112) dazu ausgestaltet ist, die Verbindungssäule (11) beim Einführen in das Passloch (221) zu führen; und
wobei der Führungsabschnitt (112) die Form eines kreisförmigen Kegelstumpfs aufweist und ein Innendurchmesser eines von der Verschlussfläche (22) entfernten Endes des Führungsabschnitts (112) kleiner als ein Innendurchmesser eines nah an der Verschlussfläche (22) liegenden Endes des Führungsabschnitts (112) ist.

## Revendications

1. Une vanne à bille (101) comprenant une structure de corps de vanne (30) et une structure d'entraînement (40), la structure de corps de vanne (30) comprenant un corps de vanne (31) et un composant d'étanchéité (100) de vanne, le corps de vanne (31) étant muni d'un orifice de vanne (311), le composant d'étanchéité (100) de la vanne étant installé dans le corps de vanne (31) et capable d'ouvrir ou de sceller l'orifice de vanne (311), et au moins une partie de la structure d'entraînement (40) étant capable de se prolonger dans le corps de vanne (31) et étant raccordé au composant d'étanchéité (100) de la vanne pour entraîner le déplacement du composant d'étanchéité (100) de la vanne dans le corps de vanne (31),
la structure de corps de vanne (30) comprend en outre un élément d'étanchéité (32), qui entoure l'orifice de vanne (311) et est configuré pour coopérer avec le composant d'étanchéité (100) de la vanne pour sceller l'orifice de vanne (311), dans laquelle une section transversale longitudinale de l'élément d'étanchéité (32) est dotée d'une forme quelconque parmi un polygone convexe, une ellipse, un cercle, une forme de D, ou une forme de taille ;
le composant d'étanchéité (100) de la vanne comprend un corps rotatif (20) et une structure d'étanchéité (10) en matériau métallique,
le corps rotatif (20) comprend une surface d'écoulement (21) et une surface d'étanchéité (22) qui sont adjacentes, un angle est défini entre la surface d'écoulement (21) et la surface d'étanchéité (22), et un trou de guidage d'écoulement (211) est situé dans la surface d'écoulement (21) afin qu'un fluide s'écoule à travers, et
la structure d'étanchéité (10) est installée sur la surface d'étanchéité (22) et est capable de sceller l'orifice de vanne (311) par rotation du corps rotatif (20) ;
**caractérisée en ce que**,
la structure d'étanchéité (10) comprend :
une plaque d'étanchéité (12) configurée pour sceller l'orifice de vanne (311) ; et
une colonne de raccordement (11) placée sur une surface latérale de la plaque d'étanchéité (12),
dans laquelle une partie de la surface d'étanchéité (22) en renfoncement est définie comme trou d'ajustement (221), et la colonne de raccordement (11) est capable de s'insérer dans le trou d'ajustement (221), permettant à la structure d'étanchéité (10) d'être installée sur la surface d'étanchéité (22) ;
un côté interne de la surface d'étanchéité (22) est muni d'une partie de bouclage (222) entourant la circonférence du trou d'ajustement (221) et saillant le long de l'axe du trou d'ajustement (221), et une fente de serrage (111) est située sur la colonne de raccordement (11) ;
une fois que la colonne de raccordement (11) s'insère dans le trou d'ajustement (221), la partie de bouclage (222) est capable de se serrer dans la fente de serrage (111) ; et
le côté interne de la surface d'étanchéité (22) est muni d'une pluralité de parties de bouclage (222), et la pluralité de parties de bouclage (222) est mutuellement séparée en sa circonférence par des trous d'ajustement (221).

2. Une vanne à bille (101) selon la revendication 1, **caractérisée en ce que** la structure de corps de vanne (30) comprend en outre un chapeau de vanne (34) et un élément élastique (35), dans laquelle
le chapeau de vanne (34) est installé sur une terminaison distale de l'orifice de vanne (311) du corps de vanne (31), et au moins une partie du chapeau de vanne (34) est capable de se prolonger dans le corps de vanne (31) et de venir en butée contre le composant d'étanchéité (100) de la vanne ; et
l'élément élastique (35) est situé entre le chapeau de vanne (34) et le composant d'étanchéité (100) de la vanne, une première terminaison de l'élément élastique (35) vient en butée contre le chapeau de vanne (34), et une deuxième terminaison de l'élément élastique (35) vient en butée contre le composant d'étanchéité (100) de la vanne.

3. Une vanne à bille (101) selon la revendication 2, **caractérisée en ce que** l'élément élastique (35) comprend un ressort plan (36).

4. Une vanne à bille (101) selon la revendication 2, **caractérisée en ce que** l'élément élastique (35) comprend :
un segment de déformation (351) comprenant au moins une unité de déformation (3511) ;
un segment de montage (352) situé à une terminaison d'au moins un segment de déformation (351), raccordé à au moins un segment de déformation (351), et situé dans le même plan horizontal qu'au moins un segment de déformation (351),
dans lequel le composant d'étanchéité (100) de la vanne vient en butée contre le segment de montage (352) ;
le composant d'étanchéité (100) de la vanne comprend une partie de montage (231), et le segment de montage (352) de l'élément élastique (35) comprend une unité renfoncée (3521),
dans lequel l'unité renfoncée (3521) est renfoncée dans le sens distal du composant d'étanchéité (100) de la vanne, un côté périphérique de la partie de montage (231) vient en butée contre l'unité renfoncée (3521), et la forme de l'unité renfoncée (3521) correspond à la forme du côté périphérique de la partie de montage (231) ; et
et une gorge de montage (341) est située sur le chapeau de vanne (34), une gorge d'ajustement (2311) est située sur une paroi latérale externe de la partie de montage (231), au moins une partie de l'élément élastique (35) est installée dans la gorge de montage (341), une première terminaison de l'élément élastique (35) vient en butée contre le chapeau de vanne (34), et une deuxième terminaison de l'élément élastique (35) est installée dans la gorge d'ajustement (2311).

5. Une vanne à bille (101) selon la revendication 2, **caractérisée en ce que** le corps de vanne (31) est raccordé au chapeau de vanne (34) par moyens de soudage ultrasonique ou raccord thermofusible.

6. Une vanne à bille (101) selon la revendication 1, **caractérisée en ce que** la structure d'entraînement (40) comprend une base (41) et un couvercle supérieur (44), et le couvercle supérieur (44) est placé sur la base (41) et raccordé à la base (41) par moyens de soudage ultrasonique ou raccord thermofusible ;
une paroi latérale externe du corps de vanne (31) est munie d'une partie de raccordement (33), un côté proximal du corps de vanne (31) de la base (41) est muni d'une partie d'ajustement (42), et la partie de raccordement (33) et la partie d'ajustement (42) sont couplées et raccordée mutuellement ;
une partie de la partie de raccordement (33) saillant dans le sens circonférentiel est définie comme bloc de raccordement (331), la partie d'ajustement (42) comprend une structure de gorge de raccordement (421), et le bloc de raccordement (331) est capable de se prolonger dans la structure de gorge de raccordement (421) et de s'engager avec la structure de gorge de raccordement (421) ;
la structure de gorge de raccordement (421) comprend :
une gorge de réception (4211), dans laquelle le bloc de raccordement (331) est capable de se prolonger dans la gorge de réception (4211) ;
une gorge de raccordement (4212), dont un côté communique avec la gorge de réception (4211) ; et
un bloc de résistance (4213) situé sur un côté distal de la gorge de réception (4211) de la gorge de raccordement (4212) et raccordé au bas de la gorge de raccordement (4212),
dans laquelle le bloc de raccordement (331) est capable de se déplacer depuis la gorge de réception (4211) jusqu'à la gorge de raccordement (4212) et de venir en butée contre le bloc de résistance (4213), et la gorge de raccordement (4212) est capable de limiter le mouvement du bloc de raccordement (331) dans le sens de la hauteur du bloc de résistance (4213) ;
le nombre de blocs de raccordement (331) est de quatre, quatre blocs de raccordement (331) sont mutuellement séparés de façon égale sur la circonférence de la partie de raccordement (33), et les quatre blocs de raccordement (331) sont situés sur le même plan horizontal ; et
le nombre de structures de gorge de raccordement (421) est de quatre, quatre structures de gorge de raccordement (421) sont mutuellement raccordées en ordre, et dans deux structures de gorge de raccordement (421) adjacentes, un bloc de résistance (4213) de l'une des deux structures de gorge de raccordement (421) est raccordé à une gorge de réception (4211) de l'autre des deux structures de gorge de raccordement (421) adjacentes.

7. Une vanne à bille (101) selon la revendication 4, **caractérisée en ce que** la structure d'entraînement (40) est une chambre de montage (43), et la structure d'entraînement (40) comprend en outre :
un moteur électrique (45) installé dans la chambre de montage (43) ;
un composant d'entraînement (46) installé dans la chambre de montage (43) et raccordé au moteur électrique (45) ; et
un composant de tige de vanne (47), dont une première terminaison est installée dans la chambre de montage (43) et ajustée au composant d'entraînement (46) ; dont une deuxième terminaison se prolonge à l'extérieur de la chambre de montage (43) et se prolonge en outre dans le corps de vanne (31) pour être ajustée à la partie de montage (231),
dans laquelle le moteur électrique (45) est capable d'entraîner le déplacement du composant d'entraînement (46), le composant d'entraînement (46) est capable d'entraîner la rotation du composant de tige de vanne (47), permettant au composant de tige de vanne (47) d'entraîner la rotation du composant d'étanchéité (100) de la vanne sur l'axe de la partie de montage (231), de sorte qu'il ouvre ou scelle l'orifice de vanne (311).

8. Une vanne à bille (101) selon la revendication 1, **caractérisée en ce qu'**une terminaison distale de la surface d'étanchéité (22) de la partie de bouclage (222) est munie d'une partie convexe (2221) saillant dans le sens radial du trou d'ajustement (221), et la partie convexe (2221) est capable de se serrer dans la fente de serrage (111) une fois que la colonne de raccordement (11) s'insère dans le trou d'ajustement (221) ; et
la partie convexe (2221) est munie d'une surface de guidage (2222), et durant l'insertion de la colonne de raccordement (11) dans le trou d'ajustement (221), la colonne de raccordement (11) est capable d'appuyer contre la partie de bouclage (222) par guidage de la surface de guidage (2222), permettant à la partie de bouclage (222) d'être déformée.

9. Une vanne à bille (101) selon la revendication 1, **caractérisée en ce qu'**une terminaison distale de la plaque d'étanchéité (12) de la colonne de raccordement (11) est munie d'une partie de guidage (112), et la partie de guidage (112) est configurée pour guider la colonne de raccordement (11) pour qu'elle s'insère dans le trou d'ajustement (221) ; et
la partie de guidage (112) est en forme de cône tronqué circulaire, et le diamètre interne d'une terminaison distale de la surface d'étanchéité (22) de la partie de guidage (112) est inférieur au diamètre interne de la terminaison proximale de la surface d'étanchéité (22) de la partie de guidage (112).

10. Un composant d'étanchéité (100) pour vanne, adapté pour être installé dans un corps de vanne (31), le corps de vanne (31) étant muni d'un orifice de vanne (311), le composant d'étanchéité (100) de la vanne comprend corps rotatif (20) et une structure d'étanchéité (10) en matériau métallique, le corps rotatif (20) est muni d'une surface d'écoulement (21) et d'une surface d'étanchéité (22) qui sont adjacentes, un angle est défini entre la surface d'écoulement (21) et la surface d'étanchéité (22), la surface d'écoulement (21) est munie d'un trou de guidage d'écoulement (211) afin qu'un fluide s'écoule à travers, et la structure d'étanchéité (10) en matériau métallique est installée sur la surface d'étanchéité (22) et est capable de sceller l'orifice de vanne (311) par rotation du corps rotatif (20) ;
**caractérisé en ce que**,
la structure d'étanchéité (10) en matériau métallique comprend :
une plaque d'étanchéité (12) configurée pour sceller le corps de vanne (31) ; et
une colonne de raccordement (11) placée sur une surface latérale de la plaque d'étanchéité (12),
dans laquelle une partie de la surface d'étanchéité (22) en renfoncement est définie comme trou d'ajustement (221), et la colonne de raccordement (11) est capable de s'insérer dans le trou d'ajustement (221), permettant à la structure d'étanchéité (10) en matériau métallique d'être installée sur la surface d'étanchéité (22) ;
un côté interne de la surface d'étanchéité (22) est muni d'une partie de bouclage (222) entourant la circonférence du trou d'ajustement (221) et saillant le long de l'axe du trou d'ajustement (221), et une fente de serrage (111) est située sur la colonne de raccordement (11) ;
une fois que la colonne de raccordement (11) s'insère dans le trou d'ajustement (221), la partie de bouclage (222) est capable de se serrer dans la fente de serrage (111) ; et
le côté interne de la surface d'étanchéité (22) est muni d'une pluralité de parties de bouclage (222), et la pluralité de parties de bouclage (222) est mutuellement séparée en sa circonférence par des trous d'ajustement (221).

11. Un composant d'étanchéité (100) de la vanne selon la revendication 10, **caractérisé en ce qu'**une terminaison distale de la surface d'étanchéité (22) de la partie de bouclage (222) est munie d'une partie convexe (2221) saillant dans le sens radial du trou d'ajustement (221), et la partie convexe (2221) est capable de se serrer dans la fente de serrage (111) une fois que la colonne de raccordement (11) s'insère dans le trou d'ajustement (221) ; et
la partie convexe (2221) est munie d'une surface de guidage (2222), et durant l'insertion de la colonne de raccordement (11) dans le trou d'ajustement (221), la colonne de raccordement (11) est capable d'appuyer contre la partie de bouclage (222) par guidage de la surface de guidage (2222), permettant à la partie de bouclage (222) d'être déformée.

12. Un composant d'étanchéité (100) de la vanne selon la revendication 10, **caractérisé en ce qu'**une terminaison distale de la plaque d'étanchéité (12) de la colonne de raccordement (11) est munie d'une partie de guidage (112), et la partie de guidage (112) est configurée pour guider la colonne de raccordement (11) pour qu'elle s'insère dans le trou d'ajustement (221) ; et
la partie de guidage (112) est en forme de cône tronqué circulaire, et le diamètre interne d'une terminaison distale de la surface d'étanchéité (22) de la partie de guidage (112) est inférieur au diamètre interne de la terminaison proximale de la surface d'étanchéité (22) de la partie de guidage (112).
